(19) **Europäisches Patentamt / European Patent Office / Office européen des brevets**

(11) **EP 4 367 491 B1**

(12) **FASCICULE DE BREVET EUROPEEN**

(45) Date de publication et mention de la délivrance du brevet:
**01.04.2026 Bulletin 2026/14**

(21) Numéro de dépôt: **22751769.5**

(22) Date de dépôt: **05.07.2022**

(51) Classification Internationale des Brevets (IPC):
**G01L 5/00** *(2006.01)*  **G01B 7/24** *(2006.01)*

(52) Classification Coopérative des Brevets (CPC):
**G01L 5/0047; G01B 7/24;** G01N 2203/0635

(86) Numéro de dépôt international:
**PCT/FR2022/051333**

(87) Numéro de publication internationale:
**WO 2023/281201 (12.01.2023 Gazette 2023/02)**

(54) **PROCÉDÉ DE DÉTERMINATION D'UNE DÉFORMATION D'UNE ZONE D'UNE PIÈCE OBTENUE PAR FABRICATION ADDITIVE**

VERFAHREN ZUR BESTIMMUNG EINER VERFORMUNG EINES BEREICHS EINES DURCH GENERATIVE FERTIGUNG ERHALTENEN TEILS

METHOD FOR DETERMINING A DEFORMATION OF AN AREA OF A PART OBTAINED BY ADDITIVE MANUFACTURING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.07.2021 FR 2107300**

(43) Date de publication de la demande:
**15.05.2024 Bulletin 2024/20**

(73) Titulaires:
- **Université Grenoble Alpes**
  **38400 Saint-Martin-d'Hères (FR)**
- **Institut Polytechnique de Grenoble**
  **38000 Grenoble (FR)**
- **Centre National de la Recherche Scientifique**
  **75016 Paris (FR)**

(72) Inventeurs:
- **RICART, Thibault**
  **38170 SEYSSINET PARISET (FR)**
- **BASROUR, Skandar**
  **38100 GRENOBLE (FR)**
- **MUSEAU, Matthieu**
  **38800 LE PONT DE CLAIX (FR)**
- **ROBERT, Pascal**
  **38000 GRENOBLE (FR)**
- **BERAUD, Nicolas**
  **38400 SAINT-MARTIN-D'HERES (FR)**
- **PARIS, Henri**
  **38000 GRENOBLE (FR)**

(74) Mandataire: **Novaimo**
**Europa 1**
**362, avenue Marie Curie**
**Archamps Technopole**
**74166 Saint-Julien-en-Genevois Cedex (FR)**

(56) Documents cités:
**EP-A1- 2 749 615     EP-A1- 3 290 766**
**WO-A1-2014/058336     WO-A1-91/00494**
**US-A1- 2020 370 975**

- **ZHANGXIAN DENG ET AL: "Review of magnetostrictive materials for structural vibration control", SMART MATERIALS AND STRUCTURES, IOP PUBLISHING LTD., BRISTOL, GB, vol. 27, no. 11, 23 October 2018 (2018-10-23), pages 113001, XP020331668, ISSN: 0964-1726, [retrieved on 20181023], DOI: 10.1088/1361-665X/ AADFF5**

## Description

La présente invention a pour objet un procédé de détermination d'une déformation d'une zone prédéterminée d'une pièce obtenue par fabrication additive. Le procédé s'applique en particulier aux pièces en aluminium réalisées par fabrication additive métallique arc-fil WAAM (Wire Arc Additive Manufacturing en langue anglaise).

L'implémentation d'une structure témoin dans une soudure ou dans une pièce produite par fabrication additive métallique, permettant de connaître les contraintes subies par cette pièce, est connue de l'état de la technique.

De nombreuses recherches ont été basées sur l'insertion de capteurs à fibre optique de type fibre à réseaux de Bragg servant de capteur de déformation. Elles sont réalisées avec des soudures TIG (pour Tungsten Inert Gas en langue anglaise) [1-2] ou des soudures laser [3-5] utilisant de l'étain comme métal d'apport. Des études similaires ont également été réalisées pour des procédés de fabrication additive métallique inox [6-10]. Les paramètres de soudure optimaux ainsi que les défauts autour des fibres noyées y ont été analysés.

Ces capteurs à fibres optiques peuvent également être insérés dans des pièces par soudage ultrasonique et par extension dans des pièces fabriquées additivement par soudage ultrasonique [11-15]. Ces fibres optiques ont également été noyées dans des alliages de nickel ou de plomb et d'étain par dépôt électrolytique ou moulage [16-18] pour réaliser des outils de coupe intelligents.

De nombreux articles traitant de l'apport de l'intelligence à des pièces métalliques par l'insertion de fibres optiques sont cités dans l'article de Saheb et Mekid [19]. Il s'agit cependant de capteurs optiques nécessitant une couche métallique, le plus souvent à base de nickel, nécessaire pour réaliser l'adhésion avec la pièce hôte.

Les fibres optiques ne sont pas pour autant les seuls éléments qui ont été insérés dans des pièces métalliques au cours de leur processus de fabrication. Des systèmes électroniques plus complets tels que des capteurs piézoélectriques ou des jauges de contraintes de type film fin ainsi que leur connectique ont été insérés dans des procédés de fabrication additive par fusion par faisceau d'électrons [20], par fusion sur lit de poudre [21-23] ou dans des pièces moulées [24].

Ces systèmes peuvent également être intégrés à la pièce en cours de fabrication sans être soudés à la pièce mais bloqués par la soudure. Ainsi Petrat [25] intègre un système électronique et protège la connectique grâce à un système de gorges courbes. La connectique est placée au creux de la gorge, à distance du métal en fusion qui renferme l'embouchure ici réalisée par un procédé par dépôt direct de métal (DMD). Le groupe VTT en Finlande a annoncé également la possibilité d'introduire des puces lors de la fabrication des pièces [26].

L'ensemble de ces systèmes nécessitent soit une distance relative avec la soudure, soit une encapsulation céramique et/ou métallique pour être insérée sainement dans une pièce métallique.

Dans le procédé décrit dans WO 91/00494 A1, une bobine et un condensateur en parallèle sont placés à proximité d'un élément magnétostrictif pour mesurer les contraintes mécaniques sur une tige.

La présente invention vise à remédier à ces inconvénients.

Selon la revendication indépendante 1, l'invention a ainsi pour objet un procédé de détermination d'une déformation d'une zone prédéterminée d'une pièce obtenue par fabrication additive, la déformation étant engendrée par une contrainte de la pièce.

Le procédé selon l'invention comprend :

- une étape de placement, avant la contrainte de la pièce, d'un témoin magnétostrictif dans une zone représentative de la déformation, et
- une étape de détermination de ladite déformation à l'aide d'un capteur configuré pour mesurer la perméabilité magnétique du témoin magnétostrictif, la déformation étant déterminée en fonction de la variation de la perméabilité magnétique du témoin magnétostrictif entre avant et après la contrainte de la pièce.

Ainsi, l'invention réside dans l'inclusion, notamment pendant la phase de réalisation de la pièce, d'un témoin magnétostrictif qui permet de connaître les contraintes subies par celle-ci. En effet, les matériaux magnétostrictifs sous contrainte voient leur perméabilité magnétique changer.

L'étape de détermination de ladite déformation comprend une mesure de la perméabilité magnétique du témoin magnétostrictif avant la mise sous contrainte de la pièce et une mesure de la perméabilité magnétique du témoin magnétostrictif après la contrainte.

Le capteur peut comprendre, dans un exemple ne faisant pas partie de l'invention, au moins une sonde de mesure agencée pour être positionnée sur ou à proximité du témoin magnétostrictif, chaque sonde de mesure étant constituée d'un boîtier dans lequel sont disposés des moyens de génération d'un champ magnétique et au moins un capteur de mesure de champ magnétique raccordé à un mesureur de champ.

Dans un exemple ne faisant pas partie de l'invention, le capteur peut être un capteur à effet Hall.

Le capteur comprend un aimant associé à une bobine.

La bobine et l'aimant sont associés à un condensateur qui est disposé en parallèle de la bobine.

La valeur de l'inductance est proportionnelle à la perméabilité de la ferrite de la bobine. Le témoin qui est en vis-à-vis de l'aimant permet de modifier l'inductance en apportant un effet magnétique tel un aimant secondaire. En mesurant au travers du matériau de la pièce l'état magnétique du ou des témoins magnétostrictifs, il est possible de déduire les déformations et donc les contraintes qu'ils subissent et de remonter ainsi à l'état de contrainte de la pièce fabriquée.

La déformation peut être déterminée en fonction de la variation de l'inductance de la bobine entre avant et après la contrainte, l'étape de détermination de ladite déformation pouvant comprendre une mesure de l'inductance avant la contrainte de la pièce et une mesure de l'inductance après la contrainte de la pièce.

La déformation subie par la pièce imprimée est en partie transmise au témoin (corps d'épreuve). Ce témoin se déformant voit ses caractéristiques magnétiques varier. Le capteur étant à même de mesurer son état magnétique, il permet de remonter à la déformation du témoin et par connaissance du comportement mécanique total de la pièce, revenir aux déformations subies par la pièce.

L'inductance est mesurée à l'aide d'un appareil commercial dédié, qui peut être un impédance-mètre, ou une détection de fréquence de résonance par un système de détection synchrone.

Le capteur combine une bobine avec un noyau en ferrite et un aimant. Lorsque ce capteur est proche du témoin magnétostrictif, celui-ci modifie le champ magnétique au niveau de l'interface bobine/aimant. Cela modifie donc la perméabilité du noyau en ferrite composant la bobine et par conséquent son inductance. Ainsi, lors d'une déformation, la perméabilité magnétique du témoin varie et donc son influence sur le capteur fait varier la valeur de l'inductance.

Les comportements magnétiques de certains aciers sous contraintes sont connus et donnent la valeur de la perméabilité par rapport à la déformation imposée. La connaissance du comportement mécanique du témoin permet alors de remonter à la contrainte en connaissant sa déformation.

Le témoin magnétostrictif est avantageusement placé dans une zone représentative de la déformation et en contact avec ladite zone prédéterminée ou à proximité de ladite zone prédéterminée. Pour éviter de changer le comportement mécanique de la pièce, le témoin est inclus de préférence à un endroit qui ne fragilise pas la pièce subissant des contraintes lors de son utilisation tout en permettant de renseigner à distance sur l'état de contraintes aux endroits d'intérêts (par exemple : encastrement, alésage). La localisation du témoin se fait lors de la conception mécanique de la pièce afin d'identifier les emplacements idéaux permettant son inclusion sans apporter des perturbations mécaniques (fragilisation, modification de la rigidité locale).

La zone représentative de la déformation est une zone où on voit la déformation, par exemple une zone d'extrémité de la déformation, ou une zone déportée représentative de l'état de déformation de la zone critique (l'épicentre de la déformation).

Le procédé peut comprendre, préalablement à l'étape de placement du témoin magnétostrictif, une étape de détermination, par simulation, de la zone représentative de la déformation.

La zone représentative de la déformation peut être une zone d'extrémité de la zone prédéterminée déformée.

L'étape de placement, avant la contrainte de la pièce, d'un témoin magnétostrictif dans une zone représentative de la déformation, peut avoir lieu au cours du processus de fabrication de la pièce, et le procédé peut comprendre en outre une étape d'ajustement des paramètres de fabrication de la pièce pour une intégration saine du témoin magnétostrictif dans la pièce.

La pièce peut être obtenue par fabrication additive métallique arc-fil.

La pièce peut être une pièce en un matériau non ferromagnétique, ou plus généralement en un matériau amagnétique.

La pièce peut comprendre un matériau métallique amagnétique, par exemple choisi par exemple parmi l'aluminium et le titane, ou parmi d'autres matériaux amagnétiques.

Le témoin magnétostrictif peut comprendre un acier, un alliage fer-gallium, un alliage de terbium, dysprosium et fer, ou un alliage de fer, nickel et cobalt, ou potentiellement tous types de matériaux magnétostrictifs.

Dans sa réalisation initiale, le capteur est constitué d'un bobinage avec un noyau ferromagnétique d'inductance L et d'un aimant permanent. La bobine peut être remplacée, dans un exemple ne faisant pas partie de l'invention, par un capteur de champ magnétique, et l'aimant peut être un aimant permanent ou un électroaimant.

Le capteur formé de la bobine et de l'aimant est associé à un condensateur de capacité C en parallèle de la bobine créant ainsi un résonateur LC dont la fréquence propre ( $\omega_0 = 1/\sqrt{LC}$ ) peut être ajustée.

Les variations de l'état magnétique de la cible se traduisent par des modifications de la perméabilité magnétique relative ($\mu$r) effective du noyau ferromagnétique de la bobine.

Concrètement on observe :

- une modification de l'inductance L lorsque le capteur est placé sur un matériau conducteur amagnétique (ex. : aluminium, titane, cuivre) par l'apparition des courants de Foucault. Ainsi l'inductance L est fonction de l'épaisseur du métal et de la conductivité du métal.

- si on place un témoin magnétique sous un matériau conducteur amagnétique, alors l'inductance L est fonction de l'épaisseur du métal, de la conductivité du métal, de la profondeur du témoin, de la perméabilité du témoin, et du volume du témoin).

Ainsi, toute contrainte induisant une déformation du témoin magnétique entraînera une modification de la perméabilité magnétique du témoin et donc une variation d'une grandeur électrique du résonateur (décalage en fréquence, modification de l'impédance).

D'autres avantages et particularités de la présente invention résulteront de la description qui va suivre, donnée à titre d'exemple non limitatif et faite en référence aux figures annexées :

[Fig. 1] illustre schématiquement un dispositif de fabrication additive métallique d'une pièce,

[Fig. 2] est une première vue schématique d'un dispositif de mise en œuvre du procédé selon l'invention, dans une première configuration du dispositif,

[Fig. 3] est une deuxième vue schématique d'un dispositif de mise en œuvre du procédé selon l'invention, dans une première configuration du dispositif,

[Fig. 4] est une première vue schématique d'un dispositif de mise en œuvre du procédé selon l'invention, dans une deuxième configuration du dispositif,

[Fig. 5] est une deuxième vue schématique d'un dispositif de mise en œuvre du procédé selon l'invention, dans une deuxième configuration du dispositif,

[Fig. 6] est une vue en perspective illustrant le placement d'un témoin magnétostrictif dans la pièce.

[Fig. 7] est une vue de côté illustrant le placement d'un témoin magnétostrictif dans la pièce.

DESCRIPTION DETAILLEE

L'invention s'inscrit dans le domaine de la maintenance préventive de pièces mécaniques. Les nouvelles technologies de fabrication additive, notamment de type WAAM (Wire Arc Additive Manufacturing en langue anglaise), permettent de réaliser des pièces tridimensionnelles complexes en matériaux métalliques amagnétiques soudables qui ne deviennent pas magnétiques après soudure, comme de l'aluminium ou de l'étain, et sans passer par des moules.

La fabrication additive a révolutionné le paradigme de la fabrication ces dernières années en offrant la possibilité de créer des pièces de formes très complexes, voire impossibles à obtenir par les procédés conventionnels, sans outillages et dans des délais très courts. Parmi les différentes techniques de fabrication additive, on trouve les technologies arc-fil métallique ou WAAM qui appartient à la famille du dépôt d'énergie direct (DED). Selon la norme ASTM F 279-12A (Standard Terminology for Additive Manufacturing Technologies en langue anglaise), ces procédés sont définis comme la combinaison d'un arc électrique utilisé comme source de chaleur et d'un fil utilisé comme apport de matières première.

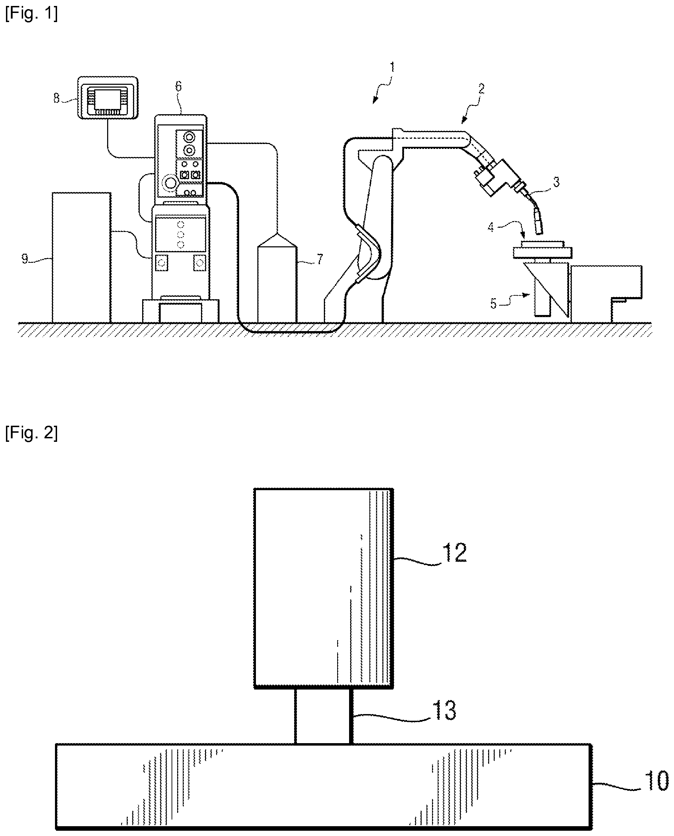

Tel qu'illustré à la figure 1, un dispositif 1 de fabrication additive de type arc-fil métallique comprend un robot 2 qui est muni d'une torche 3 permettant la fabrication additive sur un substrat 4. Le substrat 4 est disposé sur un dispositif vireur 5 à deux axes.

Le robot 2 est relié à un générateur 6, qui est luimême connecté à un réservoir de gaz 7, à une unité de contrôle à distance 8, ainsi qu'à un système de contrôle du robot 9.

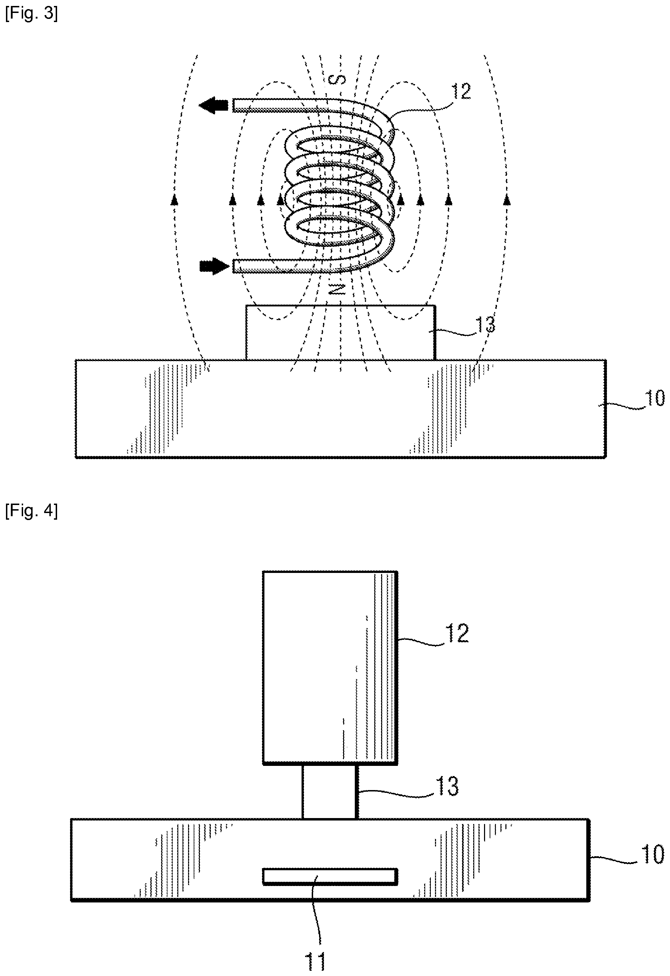

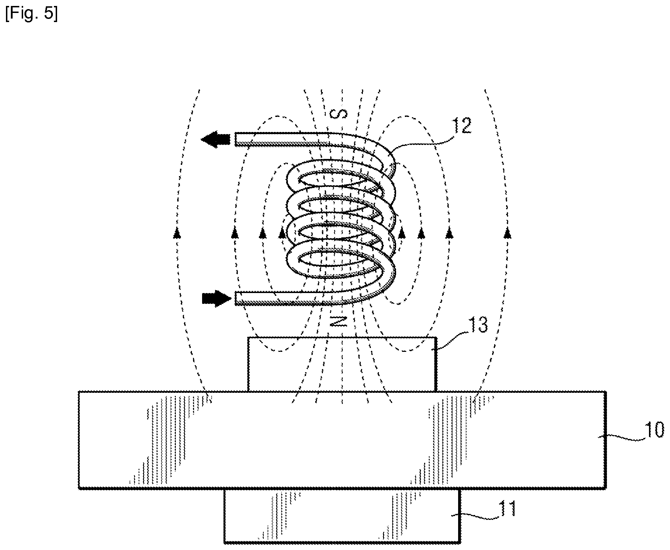

Les figures 2 à 4 montrent une pièce 10 obtenue par le procédé décrit cidessus. L'invention consiste notamment à inclure pendant la phase de réalisation de la pièce 10, un témoin magnétostrictif 11, par exemple une pièce témoin en acier, qui permet de connaître les déformations et donc les contraintes subies par la pièce 10 (figures 4 et 5).

Le procédé selon l'invention comprend avantageusement deux parties.

Une première partie comprend l'inclusion d'un témoin 11, par exemple un témoin d'épaisseur inférieure à 1 mm, et de surface inférieure au $cm^2$, dans la pièce 10 en aluminium, à une distance de 0,5 à 5 mm de la surface de la pièce 11, dans une zone permettant de contrôler les contraintes subies par cette pièce 11.

Le témoin 11 est ainsi invisible par une inspection externe. Pour cela, une première étape consiste, à partir du cahier des charges et d'une préconception du produit, à déterminer le placement du témoin en acier 11 pour contrôler les contraintes subies par la pièce 10 durant la phase d'utilisation définie par le cahier des charges. La géométrie de la pièce 10 peut être adaptée. La seconde étape a pour objectif de simuler le comportement de la pièce 10 en s'assurant que le témoin 11 répond, en fonction des différents chargements, aux attentes (avec éventuellement un retour à l'étape précédente si les résultats de la simulation ne sont pas conformes). Ces deux étapes reposent sur des modélisations et simulations par éléments finis. A la fin de ces deux étapes, la phase de conception de la pièce intelligente est terminée. L'étape suivante porte sur la préparation de la fabrication. La stratégie de fabrication (génération des trajectoires et choix des paramètres du procédé) est définie pour être compatible avec la fabrication de la pièce 10 et l'insertion du témoin en acier 11. Enfin, les dernières étapes concernent la validation de la stratégie de fabrication de la pièce intelligente et le test de son comportement.

La deuxième partie traite de la mise en œuvre d'un capteur pour déterminer la déformation.

Initialement, ce capteur est composé d'une bobine 12 présentant par exemple une inductance d'une valeur de quelque mH. L'originalité réside dans le report d'un aimant 13 (de surface par exemple inférieure à 1 $cm^2$, et d'épaisseur par exemple de l'ordre de quelques millimètres) sur la bobine 12. Cet ajout diminue sa valeur d'inductance ($L_0 \rightarrow L_1$) par perturbation de la ferrite constituant le noyau de la bobine. Un condensateur, non représenté, est relié en parallèle à l'ensemble bobine 12/aimant 13 afin de décaler la fréquence de résonance du filtre LC ainsi constitué.

On se place tout d'abord loin de toutes cibles métalliques afin de mesurer la fréquence de résonance du capteur ($f_0$ et $\phi = 0°$). On se place ensuite avec le capteur sur une pièce en aluminium 10. Des courants de Foucault viennent alors perturber l'inductance du capteur ce qui entraîne la diminution de sa valeur ($L_1 \to L_2$). La fréquence de résonance s'en trouve changée et on choisit la fréquence de travail correspondant à une phase $\phi = -45°$. Ce choix correspond à un point de fonctionnement pour lequel la sensibilité en °/Hz est la plus élevée. Enfin, lorsqu'on place un témoin 11 en acier sous l'aluminium on constate une variation de l'inductance ($L_2 \to L_3$) provoquée cette fois ci par l'influence magnétique. En effet la présence de l'acier proche d'un aimant augmente de quelques centaines de $\mu$T voir du mT le champ magnétique vu par l'inductance. Cette perturbation entraîne la diminution de l'inductance du capteur qui voit ainsi sa fréquence de résonance augmenter.

En lisant l'écart entre la phase initiale de -45° dans le cas de l'aluminium seul et la phase obtenue lors de la lecture de l'acier, il est possible de mesurer l'état magnétique du témoin en connaissant son volume.

L'étape suivante consiste alors à contraindre l'ensemble et de noter les variations de la phase de l'impédance du capteur qui sont engendrées par la variation de la perméabilité de l'acier contraint. Il est ainsi possible de remonter aux contraintes vues par le témoin et donc aux contraintes subies par la pièce en aluminium.

Pour vérifier que le capteur est sensible aux variations de perméabilité, deux expériences ont été réalisées :

- faire varier l'épaisseur du témoin en acier sous l'aluminium de 10 $\mu$m à 1 mm chaque témoin ayant donné sa propre signature,
- placer un échantillon d'aluminium (qq mm d'épais) sous lequel un témoin en acier a été collé, dans une étuve avec notre capteur, les signaux obtenus ont montré des contraintes engendrées dans l'acier par phénomène de dilatation thermique.

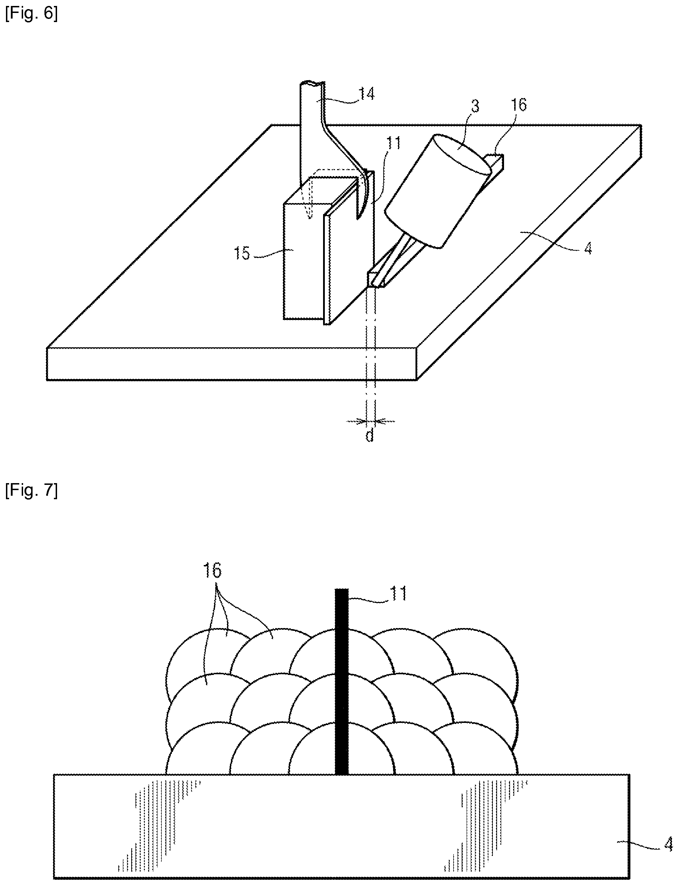

La figure 6 représente un exemple d'installation pour recouvrir et noyer une inclusion magnétique 11 (le témoin). Celle-ci est maintenue via une pince 14 à une masse 15 servant d'échangeur thermique. Le maintien du témoin 11 dans une position donnée peut être réalisé autrement et sans échangeur thermique. Les cordons de soudures 16 sont ici réalisés avec une torche de soudure 3 mais peuvent être réalisés avec une technologie différente. En fonction des paramètres utilisées pour réaliser le cordon 16, la distance d entre la surface de l'inclusion 11 et le centre du cordon de soudure le plus proche peut varier.

La figure 7 représente une vue de côté en coupe de l'inclusion magnétique 11. Elle est noyée autour de plusieurs cordons de soudures 16 empilés les uns sur les autres et déposés de part et d'autre de l'inclusion magnétique 11.

**Liste des références**

[1] Grandal et al., « Technique for Embedding Fiber Optics in Metallic Structures for Smart Material Applications », 8th European Workshop On Structural Health Monitoring (EWSHM 2016), 5- 8 July 2016.

[2] T. Grandal et al, « Analysis of Fiber Optic Sensor Embedded in Metals by Automatic and Manual TIG Welding », IEEE Sensors J., vol. 19, no 17, p. 7425 7433, sept. 2019, doi: 10.1109/JSEN.2019.2916639.

[3] T. Grandal et al, « Laser brazing metallic embedding technique for fiber optic sensors », in 2017 25th Optical Fiber Sensors Conference (OFS), avr. 2017, p. 1 4, doi: 10.1117/12.2263974.

[4] T. Grandal et al « Smart metallic part manufacturing by laser-cladding based embedding of optical fiber sensors », in Imaging and Applied Optics 2018 (3D, AO, AIO, COSI, DH, IS, LACSEA, LS&C, MATH, pcAOP) (2018), paper ATu3A.2, juin 2018, p. ATu3A.2, doi: 10.1364/AIO.2018.ATu3A.2.

[5] T. Grandal et al « Laser Cladding-Based Metallic Embedding Technique for Fiber Optic Sensors », Journal of Lightwave Technology, vol. 36, no 4, p.1018 1025, févr. 2018, doi: 10.1109/JLT.2017.2748962.

[6] X. Li et al « Processing and microstructures of fiber Bragg grating sensors embedded in stainless steel », Metallurgical and Materials Transactions A, vol. 9, no33, p. 3019-3024, 2002.

[7] X. Li et al « Metal Embedded Fiber Bragg Grating Sensors in Layered Manufacturing », Journal of Manufacturing Science and Engineering, vol. 125, no 3, p. 577 585, août 2003, doi: 10.1115/1.1581889.

[8] D. Havermann et al « In-situ measurements with fibre Bragg gratings embedded in stainless steel », in 23rd International Conference on Optical Fibre Sensors, juin 2014, vol. 9157, p. 9157A1, doi: 10.1117/12.2059587.

[9] D. Havermann et al « Measuring residual stresses in metallic components manufactured with fibre Bragg gratings embedded by selective laser melting », in 24th International Conference on Optical Fibre Sensors, sept. 2015, vol. 9634, p. 96340T, doi: 10.1117/12.2194352.

[10] D. Havermann et al « Temperature and Strain Measurements With Fiber Bragg Gratings Embedded in Stainless Steel 316 », Journal of Lightwave Technology, vol. 33, no 12, p. 2474 2479, juin 2015, doi: 10.1109/JLT.2014.2366835.

[11] T. Monaghan et al « Solid-state additive manufacturing for metallized optical fiber integration », Composites Part A: Applied Science and Manufacturing, vol. 76, p. 181 193, sept. 2015, doi: 10.1016/j.compositesa.2015.05.032.

[12] C. Mou et al « Smart structure sensors based on embedded fibre Bragg grating arrays in aluminium alloy matrix by ultrasonic consolidation », Meas. Sci. Technol., vol. 20, no 3, p. 034013, 2009, doi: 10.1088/0957-0233/20/3/034013.

[13] S. K. Chilelli et al « Detection of Crack Initiation and Growth Using Fiber Bragg Grating Sensors Embedded into Metal Structures through Ultrasonic Additive Manufacturing », Sensors, vol. 19, no 22, p. 4917, janv. 2019, doi: 10.3390/s19224917.

[14] Y. Li et al « Ultrasonic embedding of nickel-coated fiber Bragg grating in aluminum and associated sensing characteristics », Optical Fiber Technology, vol. 18, no 1, p. 7 13, janv. 2012, doi: 10.1016/j.yofte.2011.09.004.

[15] M. Dapino « Additive manufacturing of smart metallic structures », SPIE Newsroom, févr. 2014, doi: 10.1117/2.1201401.005322.

[16] H. Alemohammad et al « Metal Embedded Optical Fiber Sensors: Laser-Based Layered Manufacturing Procedures », J. Manuf. Sci. Eng, vol. 133, no 3, p. 031015-031015 12, juin 2011, doi: 10.1115/1.4004203. [17] D.M. Paganin, H. Labriet, E. Brun, S. Berujon, Single-image geometric-flow x-ray speckle tracking, Physics.med. (2018).

[17] H. Alemohammad et al « Smart tools with embedded optical fiber sensors: Laser based layered manufacturing procedures », in International Congress on Applications of Lasers & Electro-Optics, Orlando, Florida, USA, 2009, p. 1160 1164, doi: 10.2351/1.5061467.

[18] H. Alemohammad et al « Fabrication of smart cutting tools with embedded optical fiber sensors using combined laser solid freeform fabrication and moulding techniques », Optics and Lasers in Engineering, vol. 45, no 10, p. 1010 1017, oct. 2007, doi: 10.1016/j.optlaseng.2007.04.006.

[19] N. Saheb et al « Fiber-Embedded Metallic Materials: From Sensing towards Nervous Behavior », Materials, vol. 8, no 11, p. 7938 7961, nov. 2015, doi:10.3390/ma8115435.

[20] M. S. Hossain et al. « Fabrication of smart parts using powder bed fusion additive manufacturing technology », Additive Manufacturing, vol. 10, p. 58 66, avr. 2016, doi: 10.1016/j.addma.2016.01.001.

[21] H. Choi et al « Microfabrication and characterization of metal-embedded thin-film thermomechanical microsensors for applications in hostile manufacturing environments », Journal of Microelectromechanical Systems, vol. 15, no 2, p. 322 329, avr. 2006, doi: 10.1109/JMEMS.2006.872235.

[22] X. Li et al « Shape deposition manufacturing of smart metallic structures with embedded sensors », in Smart Structures and Materials 2000: Sensory Phenomena and Measurement Instrumentation for Smart Structures and Materials, juin 2000, vol. 3986, p. 160 172, doi: 10.1117/12.388103.

[23] X. Li et al « Embedding and characterization of fiber -optic and thin-film sensors in metallic structures », Sensor Review, vol. 24, no 4, p. 370 377, déc. 2004, doi: 10.1108/02602280410558403.

[24] C. Pille, « In process embedding of piezo sensors and RFID transponders into cast parts for autonomous manufacturing logistics », Smart Systems Integration, Como, Italy, mars 2010.

[25] T. Petrat et al « Embedding electronics into additive manufactured components using laser metal deposition and selective laser melting », Procedia CIRP, vol. 74, p. 168 171, janv. 2018, doi: 10.1016/j.procir.2018.08.071.

[26]      https://www.vttresearch.com/media/news/vtt-has-3d-printed-a-smart-metal-part

## Revendications

1. Procédé de détermination d'une déformation d'une zone prédéterminée d'une pièce (10) obtenue par fabrication additive, la déformation étant engendrée par une contrainte de la pièce (10), **caractérisé en ce que** le procédé comprend :

   - une étape de placement, avant la contrainte de la pièce (10), d'un témoin magnétostrictif (11) dans une zone représentative de la déformation, et
   - une étape de détermination de ladite déformation à l'aide d'un capteur configuré pour mesurer la perméabilité magnétique du témoin magnétostrictif (11), la déformation étant déterminée en fonction de la variation de la perméabilité magnétique du témoin magnétostrictif (11) entre avant et après la contrainte de la pièce (10), le capteur comprenant un aimant (13) associé à une bobine (12) comprenant un noyau constitué de ferrite, la bobine (12) et l'aimant (13) étant associés à un condensateur qui est disposé en parallèle de la bobine (12).

2. Procédé selon la revendication 1, **caractérisé en ce que** la déformation est déterminée en fonction de la variation de l'inductance de la bobine (12) entre avant et après la contrainte, l'étape de détermination de ladite déformation comprenant une mesure de l'inductance de la bobine (12) avant la contrainte de la pièce (10) et une mesure de l'inductance après la contrainte de la pièce (10).

3. Procédé selon la revendication 1 ou 2, **caractérisé en ce que** le témoin magnétostrictif (11) est placé dans une zone représentative de la déformation et en contact avec ladite zone prédéterminée ou à proximité de ladite zone prédéterminée.

4. Procédé selon l'un des revendications 1 à 3, **caractérisé en ce qu'**il comprend, préalablement à l'étape de placement du témoin magnétostrictif (11), une étape de détermination, par simulation, de la zone représentative de la déformation.

5. Procédé selon l'une des revendications 1 à 4, **caractérisé en ce que** la zone représentative de la déformation est une zone d'extrémité de la zone prédéterminée déformée.

6. Procédé selon l'une des revendications 1 à 5, **caractérisé en ce que** l'étape de placement, avant la contrainte de la pièce (10), d'un témoin magnétostrictif (11) dans une zone représentative de la déformation, a lieu au cours du processus de fabrication de la pièce (10), et **en ce qu'**il comprend en outre une étape d'ajustement des paramètres de fabrication de la pièce (10) pour une intégration saine du témoin magnétostrictif (11) dans la pièce (10).

7. Procédé selon l'une des revendications 1 à 6, **caractérisé en ce que** la pièce (10) est obtenue par fabrication additive métallique arc-fil.

8. Procédé selon l'une des revendications 1 à 7, **caractérisé en ce que** la pièce (10) est une pièce en un matériau amagnétique.

9. Procédé selon la revendication 8, **caractérisé en ce que** la pièce (10) comprend un matériau métallique amagnétique choisi parmi l'aluminium, et le titane.

10. Procédé selon l'une des revendications 1 à 9, **caractérisé en ce que** le témoin magnétostrictif (11) comprend un acier, un alliage fer-gallium, un alliage de terbium, dysprosium et fer, ou un alliage de fer, nickel et cobalt.

**Patentansprüche**

1. Verfahren zum Bestimmen einer Verformung eines vorbestimmten Bereits eines durch generative Fertigung erhaltenen Teils (10), wobei die Verformung durch eine Beanspruchung des Teils (10) herbeigeführt wird, **dadurch gekennzeichnet, dass** das Verfahren umfasst:

- einen Schritt des Platzierens, vor dem Beanspruchen des Teils (10), eines magnetostriktiven Referenzelements (11) in einem für die Verformung repräsentativen Bereich, und
- einen Schritt des Bestimmens der Verformung mit Hilfe eines Sensors, der dazu ausgebildet ist, die magnetische Permeabilität des magnetostriktiven Referenzelements (11) zu messen, wobei die Verformung in Abhängigkeit von der Änderung der magnetischen Permeabilität des magnetostriktiven Referenzelements (11) zwischen vor und nach der Beanspruchung des Teils (10) bestimmt wird, wobei der Sensor einen Magneten (13) umfasst, der einer Spule (12) zugeordnet ist, die einen aus Ferrit bestehenden Kern umfasst, wobei die Spule (12) und der Magnet (13) einem Kondensator zugeordnet sind, der parallel zu der Spule (12) angeordnet ist.

2. Verfahren nach Anspruch 1, **dadurch gekennzeichnet, dass** die Verformung in Abhängigkeit von der Änderung der Induktivität der Spule (12) zwischen vor und nach der Beanspruchung bestimmt wird, wobei der Schritt des Bestimmens der Verformung ein Messen der Induktivität der Spule (12) vor der Beanspruchung des Teils (10) und ein Messen der Induktivität nach der Beanspruchung des Teils (10) umfasst.

3. Verfahren nach Anspruch 1 oder 2, **dadurch gekennzeichnet, dass** das magnetostriktive Referenzelement (11) in einem für die Verformung repräsentativen Bereich und in Kontakt mit dem vorbestimmten Bereich oder in der Nähe des vorbestimmten Bereichs platziert wird.

4. Verfahren nach einem der Ansprüche 1 bis 3, **dadurch gekennzeichnet, dass** es vor dem Schritt des Platzierens des magnetostriktiven Referenzelements (11) einen Schritt des Bestimmens des für die Verformung repräsentativen Bereichs durch Simulation umfasst.

5. Verfahren nach einem der Ansprüche 1 bis 4, **dadurch gekennzeichnet, dass** der für die Verformung repräsentative Bereich ein Endbereich des verformten vorbestimmten Bereichs ist.

6. Verfahren nach einem der Ansprüche 1 bis 5, **dadurch gekennzeichnet, dass** der Schritt des Platzierens, vor dem Beanspruchen des Teils (10), eines magnetostriktiven Referenzelements (11) in einem für die Verformung repräsentativen Bereich während des Prozesses zur Fertigung des Teils (10) stattfindet und dass es ferner einen Schritt des Anpassens der Fertigungsparameter des Teils (10) zwecks einer unversehrten Einarbeitung des magnetostriktiven Referenzelements (11) in das Teil (10) umfasst.

7. Verfahren nach einem der Ansprüche 1 bis 6, **dadurch gekennzeichnet, dass** das Teil (10) durch metallische draht-/lichtbogenbasierte generative Fertigung erhalten wird.

8. Verfahren nach einem der Ansprüche 1 bis 7, **dadurch gekennzeichnet, dass** das Teil (10) ein Teil aus einem a magnetischen Material ist.

9. Verfahren nach Anspruch 8, **dadurch gekennzeichnet, dass** das Teil (10) ein nichtmagnetisches metallisches Material umfasst, das aus Aluminium und Titan gewählt ist.

10. Verfahren nach einem der Ansprüche 1 bis 9, **dadurch gekennzeichnet, dass** das magnetostriktive Referenzelement (11) einen Stahl, eine Eisen-GalliumLegierung, eine Legierung aus Terbium, Dysprosium und Eisen oder eine Legierung aus Eisen, Nickel und Cobalt umfasst.

**Claims**

1. A method for determination of a deformation of a predetermined zone of a part (10) obtained by additive manufacturing, the deformation being generated by stress in the part (10), **characterized in that** the method includes:

    - before stress is applied to the part (10), a step of positioning a magnetostrictive test piece (11) in a representative zone of the deformation, and
    - a step of determination of said deformation with the aid of a sensor configured to measure the magnetic permeability of the magnetostrictive test piece (11), the deformation being determined as a function of the variation of the magnetic permeability of the magnetostrictive test piece (11) before and after stress is applied to the part (10), the sensor including a magnet (13) associated with a coil (12) including a ferrite core, the coil (12) and the magnet (13) being associated with a capacitor that is connected in parallel with the coil (12).

2. The method as claimed in claim 1, **characterized in that** the deformation is determined as a function of the variation of the inductance of the coil (12) between before and after stress is applied, the step of determination of said deformation including measurement of the inductance of the coil (12) before stress is applied to the part (10) and measurement of the inductance after stress is applied to the part (10).

3. The method as claimed in claim 1 or 2, **characterized in that** the magnetostrictive test piece (11) is placed in a zone representative of the deformation and in contact with said predetermined zone or in the proximity of said predetermined zone.

4. The method as claimed in any one of claims 1 to 3, **characterized in that** it includes, before the step of positioning the magnetostrictive test piece (11), a step of determination by simulation of the zone re

presentative of the deformation.

5. The method as claimed in any one of claims 1 to 4, **characterized in that** the zone representative of the deformation is an edge zone of the deformed predetermined zone.

6. The method as claimed in any one of claims 1 to 5, **characterized in that** the step, before stress is applied to the part (10), of positioning a magnetostrictive test piece (11) in a zone representative of the deformation takes place during the process of manufacture of the part (10) and **in that** it further includes a step of adjustment of the manufacturing parameters of the part (10) for clean integration of the magnetostrictive test piece (11) into the part (10).

7. The method as claimed in any one of claims 1 to 6, **characterized in that** the part (10) is obtained by metal wire arc additive manufacturing.

8. The method as claimed in any one of claims 1 to 7, **characterized in that** the part (10) is an a magnetic material part.

9. The method as claimed in claim 8, **characterized in that** the part (10) includes an a magnetic metal chosen from aluminum and titanium.

10. The method as claimed in any one of claims 1 to 9, **characterized in that** the magnetostrictive test piece (11) contains a steel, an iron-gallium alloy, an alloy of terbium, dysprosium and iron, or an alloy of iron, nickel and cobalt.

[Fig. 1]

[Fig. 2]

[Fig. 3]

[Fig. 4]

[Fig. 5]

[Fig. 6]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9100494 A1

**Littérature non-brevet citée dans la description**

- **GRANDAL et al.** Technique for Embedding Fiber Optics in Metallic Structures for Smart Material Applications. *8th European Workshop On Structural Health Monitoring (EWSHM 2016)*, 05 July 2016
- **T. GRANDAL et al.** Analysis of Fiber Optic Sensor Embedded in Metals by Automatic and Manual TIG Welding. *IEEE Sensors J.*, September 2019, vol. 19 (17), 7425-7433
- **T. GRANDAL et al.** Laser brazing metallic embedding technique for fiber optic sensors. *2017 25th Optical Fiber Sensors Conference (OFS)*, April 2017, 1-4
- **T. GRANDAL et al.** Smart metallic part manufacturing by laser-cladding based embedding of optical fiber sensors. *Imaging and Applied Optics 2018 (3D, AO, AIO, COSI, DH, IS, LACSEA, LS&C, MATH, pcAOP) (2018), paper ATu3A*, 02 June 2018
- **T. GRANDAL et al.** Laser Cladding-Based Metallic Embedding Technique for Fiber Optic Sensors. *Journal of Lightwave Technology*, February 2018, vol. 36 (4), 1018-1025
- **X. LI et al.** Processing and microstructures of fiber Bragg grating sensors embedded in stainless steel. *Metallurgical and Materials Transactions A*, 2002, vol. 9 (33), 3019-3024
- **X. LI et al.** Metal Embedded Fiber Bragg Grating Sensors in Layered Manufacturing. *Journal of Manufacturing Science and Engineering*, August 2003, vol. 125 (3), 577-585
- **D. HAVERMANN et al.** In-situ measurements with fibre Bragg gratings embedded in stainless steel. *23rd International Conference on Optical Fibre Sensors*, June 2014, vol. 9157, 9157A1
- **D. HAVERMANN et al.** Measuring residual stresses in metallic components manufactured with fibre Bragg gratings embedded by selective laser melting. *24th International Conference on Optical Fibre Sensors*, September 2015, vol. 9634, 96340T
- **D. HAVERMANN et al.** Temperature and Strain Measurements With Fiber Bragg Gratings Embedded in Stainless Steel 316. *Journal of Lightwave Technology*, June 2015, vol. 33 (12), 2474-2479

- **T. MONAGHAN et al.** Solid-state additive manufacturing for metallized optical fiber integration. *Composites Part A: Applied Science and Manufacturing*, September 2015, vol. 76, 181-193
- **C. MOU et al.** Smart structure sensors based on embedded fibre Bragg grating arrays in aluminium alloy matrix by ultrasonic consolidation. *Meas. Sci. Technol.*, 2009, vol. 20 (3), 034013
- **S. K. CHILELLI et al.** Detection of Crack Initiation and Growth Using Fiber Bragg Grating Sensors Embedded into Metal Structures through Ultrasonic Additive Manufacturing. *Sensors*, January 2019, vol. 19 (22), 4917
- **Y. LI et al.** Ultrasonic embedding of nickel-coated fiber Bragg grating in aluminum and associated sensing characteristics. *Optical Fiber Technology*, January 2012, vol. 18 (1), 7-13
- **M. DAPINO.** Additive manufacturing of smart metallic structures. *SPIE Newsroom*, February 2014
- **H. ALEMOHAMMAD et al.** Metal Embedded Optical Fiber Sensors: Laser-Based Layered Manufacturing Procedures. *J. Manuf. Sci. Eng*, 12 June 2011, vol. 133 (3), 031015-031015
- **D.M. PAGANIN ; H. LABRIET ; E. BRUN ; S. BERUJON.** Single-image geometric-flow x-ray speckle tracking. *Physics.med.*, 2018
- **H. ALEMOHAMMAD et al.** Smart tools with embedded optical fiber sensors: Laser based layered manufacturing procedures. *International Congress on Applications of Lasers & Electro-Optics, Orlando, Florida, USA*, 2009, 1160-1164
- **H. ALEMOHAMMAD et al.** Fabrication of smart cutting tools with embedded optical fiber sensors using combined laser solid freeform fabrication and moulding techniques. *Optics and Lasers in Engineering*, October 2007, vol. 45 (10), 1010-1017
- **N. SAHEB et al.** Fiber-Embedded Metallic Materials: From Sensing towards Nervous Behavior. *Materials*, November 2015, vol. 8 (11), 7938-7961
- **M. S. HOSSAIN et al.** Fabrication of smart parts using powder bed fusion additive manufacturing technology. *Additive Manufacturing*, April 2016, vol. 10, 58-66

- **H. CHOI et al.** Microfabrication and characterization of metal-embedded thin-film thermomechanical microsensors for applications in hostile manufacturing environments. *Journal of Microelectromechanical Systems*, April 2006, vol. 15 (2), 322-329
- **X. LI et al.** Shape deposition manufacturing of smart metallic structures with embedded sensors. *Smart Structures and Materials 2000: Sensory Phenomena and Measurement Instrumentation for Smart Structures and Materials*, June 2000, vol. 3986, 160-172
- **X. LI et al.** Embedding and characterization of fiber-optic and thin-film sensors in metallic structures. *Sensor Review*, December 2004, vol. 24 (4), 370-377
- **C. PILLE**. In process embedding of piezo sensors and RFID transponders into cast parts for autonomous manufacturing logistics. *Smart Systems Integration, Como, Italy*, March 2010
- **T. PETRAT et al.** Embedding electronics into additive manufactured components using laser metal deposition and selective laser melting. *Procedia CIRP*, January 2018, vol. 74, 168-171